# EUROPÄISCHE PATENTSCHRIFT

(11) **EP 3 313 783 B1**
(45) Veröffentlichungstag und Bekanntmachung des Hinweises auf die Patenterteilung: **21.10.2020**
(21) Anmeldenummer: 16734605.5
(22) Anmeldetag: 28.06.2016
(51) Int. Cl.: C01G 1/02, C01B 33/18, C01B 13/34

(54) **VERFAHREN ZUR HERSTELLUNG VON METALLOXIDPULVERN MITTELS FLAMMENSPRAYPYROLYSE**
METHOD FOR THE PREPARATION OF METAL OXIDE POWDERS USING FLAME SPRAY PYROLYSIS
PROCEDE DE FABRICATION DE POUDRES D'OXYDE METALLIQUE PAR PYROLYSE AU PISTOLET A FLAMME

(30) Priorität: 29.06.2015 EP 15174259
(43) Veröffentlichungstag der Anmeldung: 02.05.2018
(73) Patentinhaber: Evonik Operations GmbH, 45128 Essen (DE)
(72) Erfinder: KATUSIC, Stipan, 65812 Bad Soden (DE); KRESS, Peter, 63791 Karlstein (DE); ALFF, Harald, 63796 Kahl (DE); RENGER, Tobias, 63538 Großkrotzenburg (DE); WIEGAND, Armin, 63538 Großkrotzenburg (DE)
(74) Vertreter: Evonik Patent Association
(86) Internationale Anmeldenummer: PCT/EP2016/064929
(87) Internationale Veröffentlichungsnummer: WO 2017/001366

(56) Entgegenhaltungen:
- EP-A2- 1 688 394
- DE-A1- 10 139 320
- MÄDLER L ET AL: "Controlled synthesis of nanostructured particles by flame spray pyrolysis", JOURNAL OF AEROSOL SCIENCE, PERGAMON, AMSTERDAM, NL, Bd. 33, 1. Januar 2002 (2002-01-01), Seiten 369-389, XP002390211, ISSN: 0021-8502, DOI: 10.1016/S0021-8502(01)00159-8

## Beschreibung

Die Erfindung betrifft ein Verfahren zur Herstellung von Metalloxid- und/oder Siliciumdioxidpulvern mittels Flammenspraypyrolyse.

In Chemical Engineering Science, Vol. 53, No. 24, pp. 4105-4112, 1998 ist die Herstellung von Silicapartikeln durch Reaktion eines Siloxanes mit Sauerstoff/Stickstoffmischungen und einem Brenngas in einem Flammendiffusionsreaktor beschrieben.

In DE-A-10139320 wird die Herstellung kugelförmiger Silicateilchen mit einer Teilchengrösse von 10 nm bis 10 µm und einer spezifischen Oberfläche von 3-300 m²/g offenbart. Dabei wird ein nichthalogeniertes Siloxan in einer Flamme umgesetzt. Die adiabatische Flammentemperatur beträgt hierbei 1600 - 5600°C. Die Verbrennung des Siloxans wird durch Zufuhr des Siloxans in flüssiger Form in den Brenner und Versprühen der Flüssigkeit mittels einer Düse durchgeführt. Das Versprühen des Siloxans erfolgt unter Verwendung eines Versprühmediums, wie Luft oder Dampf. Der maximale Tröpfchendurchmesser beträgt nicht mehr als 100 µm.

In EP-A-1688394 wird ein Verfahren zur Herstellung eines Metalloxidpulvers mit einer BET-Oberfläche von mindestens 20 m²/g offenbart, indem man ein Aerosol mit Sauerstoff in einem Reaktionsraum bei einer Reaktionstemperatur von mehr als 700°C reagieren läßt. Das Aerosol wird durch Verdüsen eines Ausgangsmaterials, mittels einer Mehrstoffdüse erhalten. Besondere Relevanz kommt dem Tröpfchendurchmesser D₃₀ zu mit 30 - 100 µm zu. Außerdem ist die Anzahl der Aerosoltröpfchen, welche grösser als 100 µm sind, bei 10% begrenzt.

In US2004156773 wird ein Verfahren zur Herstellung von pyrogenen Metalloxidteilchen offenbart, das die Schritte umfasst: Bereitstellung eines Strom eines flüssigen Ausgangsmaterials aus einer nichthalogenierten verflüchtigbaren Metalloxid-Vorstufe; Bereitstellen eines Stroms aus einem Brenngas und Verbrennen des flüssigen Ausgangsmateriales; Eindüsen der flüssigen Metalloxid-Vorstufe in den Strom des Verbrennungsgases.

In WO2010/069675 wird ein niedrigoberflächiges, pyrogenes Siliciumdioxidpulver offenbart. Es wird hergestellt, indem man ein Aerosol erhalten durch Verdüsung wenigstens eines flüssigen Siloxanes mit einem sauerstoffenthaltenden Gas in eine Flamme einbringt. Dabei gelten zusätzliche Bedingungen bezüglich des Verhältnises eingesetzter Sauerstoff/Bedarf an Sauerstoff zur vollständigen Oxidation, des Verhältnises Sauerstoff/Brenngas und des Abkühlprozesses. Die bei der Verdüsung gebildeten Tröpfchen sollten nicht größer als 100 µm sein.

In Powder Technology 246 (2013) 419-433 und Chemical Engineering Research and Design 92 (2014) 2470-2478 wird der Effekt von Düsengeometrie, Tröpfchenverteilung und die Tröpfchenverdampfung im Zusammenhang mit anderen Prozessparametern einer Flammenspraypyrolyse anhand von Modellen untersucht.

Mädler L et al. (2002) J Aerosol Science (33) 369-389 offenbaren ein Verfahren zur Herstellung strukturierter Kieselsäurepartikel durch Flammenspraypyrolyse von Hexamethyldisiloxan. Gasmassenflussrate, Tröpfchengrösse und durchschnittliche Flammensprühtemperatur werden als wichtige Bestimmungsgrößen des Prozesses erwähnt, nicht jedoch die Dimensionen des verwendeten Reaktors.

Obwohl die Flammenspraypyrolyse ein etabliertes Verfahren zur Herstellung von Metalloxiden und Siliciumdioxid ist, ist das Verständnis wie das Zusammenspiel der Prozessparameter die Eigenschaften des späteren Produktes bestimmt nur ansatzweise geklärt. So stellt die vollständige Umsetzung der Ausgangstoffe, insbesondere kohlenstoffhaltiger Ausgangsstoffe, bei geichzeitig hohem Durchsatz eine besondere Herausforderung dar.

Aufgabe der vorliegenden Erfindung war daher, ein alternatives Verfahren zur Herstellung von Metalloxiden und/oder Siliciumdioxid mittels einer Flammenspraypyrolyse bereitzustellen, welches diese Probleme überwindet.

Gegenstand der Erfindung ist ein Verfahren zur Herstellung von Metalloxid- und/oder Siliciumdioxidpulvern mittels einer Flammenspraypyrolyse, bei dem man ein eine Metall- und/oder Siliciumverbindung enthaltendes Aerosol in einem Reaktor in eine Flamme einbringt und dort zur Reaktion bringt und das erhaltene Metalloxid- und/oder Siliciumdioxidpulver von gasförmigen Stoffen abtrennt, wobei
a) die Flamme durch die Zündung eines Sauerstoff enthaltenden Gases (1) mit einem Brenngas gebildet wird,
b) das Aerosol durch gemeinsames Zerstäuben einer Metall- und/oder Siliciumverbindung und eines Zerstäubungsgases mittels einer oder mehrerer Düsen erhalten wird und
c) das Verhältnis der Sprayfläche zur Reaktorquerschnittsfläche wenigstens 0,2, bevorzugt 0,2 - 0,8, besonders bevorzugt 0,3 - 0,7, ist.

Unter Sprayfläche ist dabei die Fläche zu verstehen, die das Aerosol 30 cm unterhalb der Düsenaustritte einnimmt. Dem erfindungsgemäßen Verhältnis der Sprayfläche zur Reaktorquerschnittsfläche liegen eine sehr feine Zerstäubung und eine große Flächenabdeckung zugrunde, die die Umsetzung des Aerosoles in der Flamme günstig beeinflussen.

Die Zerstäubungsform des Aerosols ist vorzugsweise ein kreisförmiger Kegel mit einem Streubereich von 70 - 130°. Die mittlere Tropfengröße des zerstäubten Aerosoles ist bevorzugt 10 - 150 µm.

Eine besondere Ausführungsform sieht vor, dass das Aerosol erzeugt wird, indem die die Metall- und/oder Siliciumverbindung enthaltende Lösung und das Zerstäubungsgas in eine Mischkammer innerhalb der Düse strömen und in der Mischkammer vorgesehene Einbauten die Lösung unter Einwirkung des Zerstäubungsgases in einzelnen Tröpfchen zerteilt wird und das Aerosol aus der Mischkammer über Bohrungen in den Reaktor eingebracht wird.

Bei dem erfindungsgemäßen Verfahren wird ein Sauerstoff enthaltendes Gas (1) eingesetzt. Dieses wird zusammen mit dem Brenngas für die Zündung der Flamme benötigt. Zusätzlich kann ein Sauerstoff enthaltendes Gas (2) in den Reaktor eingebracht werden. Bei den Sauerstoff enthaltenden Gasen (1) und (2) handelt es sich in der Regel um Luft. Das Sauerstoff enthaltende Gas (1) wird als Primärluft, das Sauerstoff enthaltende Gas (2) als Sekundärluft bezeichnet. Bevorzugt wird die Menge an Sauerstoff enthaltenden Gas (2) so eingestellt, dass das Verhältnis Sauerstoff enthaltendes Gas (2) / Sauerstoff enthaltendes Gas (1) = 0,1 - 2 ist. Besonders bevorzugt ist der Bereich 0,2 - 1. Die Menge an Sauerstoff enthaltendem Gas (1) + (2) ist so bemessen, dass das Brenngas und die Metall- und/oder Siliciumverbindung vollständig umgesetzt werden können. Als brenngas wird bevorzugt Wasserstoff eingesetzt.

Als Zerstäubungsgas kann bei dem erfindungsgemäßen Verfahren Luft, mit Sauerstoff angereicherte Luft und/oder ein inertes Gas wie Stickstoff eingesetzt werden. In der Regel wird Luft als Zerstäubungsgas eingesetzt. Für die Zerstäubungsgasmenge gilt nach dem erfindungsgemäßen Verfahren, dass das Verhältnis Durchsatz Metall- und/oder Siliciumverbindung/ Zerstäubungsgasmenge bevorzugt 0,1 - 10 kg/Nm³ und besonders bevorzugt 0,25 - 5 kg/Nm³ ist.

Die Metall- und/oder Siliciumverbindung kann als solche selbst in flüssiger Form oder in Form einer Lösung eingesetzt werden. Als Lösungsmittel kommen Wasser und organische Lösungsmittel in Frage.

Die Metall- und/oder Siliciumkomponente der Metall- und/oder Siliciumverbindung wird bevorzugt aus der Gruppe bestehend aus AI, Co, Cr, Cu, Fe, Hf, In, Li, Mn, Mo, Nb, Ni, Si, Sn, Ta, Ti, V, Y, Zn und Zr ausgewählt. Im Rahmen der Erfindung ist Si eine besonders bevorzugte Metall- und/oder Siliciumkomponente.

Prinzipiell ist die Natur der Metall- und/oder Siliciumverbindungen nicht weiter beschränkt, solange sie unter den Reaktionsbedingungen unter Bildung der Metalloxide und/oder Siliciumdioxid hydrolysierbar oder oxidierbar sind. So können beispielsweise Chloride, Nitrate oder metallorganische Verbindungen eingesetzt werden. Es ist ebenso möglich, dass die Lösung unterschiedliche Verbindungen eines Metalles oder des Siliciums, oder mehrere Verbindungen unterschiedlicher Metalle und/oder des Siliciums enthält. Im letzteren Fall werden Metallmischoxide und/oder Metall-Silicium-Mischoxide gebildet.

Das erfindungsgemäße Verfahren ist besonders geeignet für den Einsatz von Metall- und/oder Siliciumverbindungen, die neben der Metall- und/oder Siliciumkomponente auch Kohlenstoff enthalten. Das Verfahren erlaubt die Herstellung kohlenstoffarmer Metalloxide und/oder Siliciumdioxide. Kohlenstoffarm soll bedeuten, dass der Kohlenstoffgehalt der Metalloxide und/oder Siliciumdioxide kleiner als 0,1 Gew.-%, bevorzugt kleiner 0,05 Gew.-%, ist.

Insbesondere kann die Metall- und/oder Siliciumverbindung eine siliciumhaltige Verbindung sein, die aus der Gruppe bestehend aus Silanen, Polysiloxanen, cyclischen Polysiloxanen, Silazanen und beliebigen Mischungen hiervon ausgewählt ist. Explizit seien Tetramethoxysilan, Tetraethoxysilan, Methyltriethoxysilan, Dimethyldimethoxysilan, Dimethyldiethoxysilan, Trimethylmethoxysilan, Trimethylethoxysilan, Diethylpropylethoxysilan, Siliconöl, Octamethylcyclotetrasiloxan (D4), Decamethylcyclopentasiloxan, Dodecamethylcyclohexasiloxan, Hexamethylcyclotrisiloxan und Hexamethyldisilazan genannt.

Eine besondere Ausführungsform der Erfindung sieht die Herstellung eines Kieselsäurepulvers mit einer BET-Oberfläche von wenigstens 50 m²/g, bevorzugt 70 - 300 m²/g, und einem Kohlenstoffgehalt von weniger als 0,1 Gew.-%, bevorzugt 0,01 - 0,05 Gew.-%, mittels einer Flammenspraypyrolyse vor, bei dem man ein eine siliciumhaltige Verbindung enthaltendes Aerosol in einem Reaktor in eine Flamme einbringt und dort zur Reaktion bringt, und das erhaltene Kieselsäurepulver von gasförmigen Stoffen abtrennt, wobei
a) die Flamme durch die Zündung eines Sauerstoff enthaltenden Gases (1) mit einem Brenngas gebildet wird,
b) die siliciumhaltige Verbindung aus der Gruppe bestehend aus Silanen, Polysiloxanen, cyclischen Polysiloxanen, Silazanen und beliebigen Mischungen hiervon ausgewählt ist,
c) das Aerosol durch gemeinsames Zerstäuben einer die siliciumhaltige Verbindung enthaltenden Lösung und eines Zerstäubungsgases mittels einer oder mehrerer Düsen erhalten wird und das Verhältnis der Sprayfläche zur Reaktorquerschnittsfläche wenigstens 0,2, bevorzugt 0,2 - 0,8, besonders bevorzugt 0,3 - 0,7, ist und man
d) zusätzlich ein Sauerstoff enthaltendes Gas (2) in den Reaktor einbringt, wobei das Verhältnis Sauerstoff enthaltendes Gas (2) / Sauerstoff enthaltendes Gas (1) = 0,1 - 2 ist.

### Beispiele

### Beispiel 1:

Aus 1,0 kg/h D4 und 4,0 kg/h Zerstäuberluft werden mittels einer innenmischenden Zweistoffdüse, Modelle 0/60 - 0/64, Fa. Schlick, ein Aerosol erzeugt, welches in einen Reaktor hinein in eine Flamme zerstäubt wird. Es ergibt sich eine Sprayfläche von 0,88 dm². Das Verhältnis Sprayfläche/ Reaktorquerschnittsfläche beträgt 0,5.Im Reaktor brennt eine Knallgasflamme aus Wasserstoff (2 Nm³/h) und Primärluft (20 Nm³/h), in der das Aerosol zur Reaktion gebracht wird. Zusätzlich wird Sekundärluft (5 Nm³/h) in den Reaktor eingebracht. Nach Abkühlung wird die Kieselsäure an einem Filter von gasförmigen Stoffen abgetrennt. Die mittlere Verweilzeit des Reaktionsgemisches im Reaktor beträgt 1,67 s. Die Temperatur 0,5 m unterhalb der Flamme beträgt 642°C. Die Kieselsäure hat eine BET-Oberfläche von 202 m²/g und einen Kohlenstoffgehalt von 0,04 Gew.-%.

Die Beispiele 2-8 werden analog durchgeführt. Die Einsatzmengen sind in der Tabelle wiedergegeben.

Das Verhältnis Sprayfläche/Reaktorquerschnittsfläche wird dabei variiert von 0,35 - 0,62. Die erhaltenen Kieselsäuren weisen eine BET-Oberfläche von 85 - 293 m²/g auf, wobei der Kohlenstoffgehalt mit 0,01 - 0,04 Gew.-% durchgehend sehr gering ist.

Auch die Vergleichsbeispiele V1 - V4 werden analog Beispiel 1 durchgeführt, jedoch wird hier eine außenmischende Zweistoffdüse, Modelle 02 - 09, Fa. Schlick, eingesetzt. Es ergeben sich deutlich geringere Sprayflächen und entsprechend deutlich geringere Verhältnisse Sprayfläche/ Reaktorquerschnittsfläche. Die erhaltenen Kieselsäuren weisen eine BET-Oberfläche von 16-70 m²/g auf, wobei der Kohlenstoffgehalt mit 0,13 - 0,16 Gew.-% deutlich erhöht ist.

**Tabelle: Einsatzstoffe und Reaktionsbedingungen; Stoffeigenschaften**

| **Beispiel** | | **1** | **2** | **3** | **4** | **5** | **6** | **7** | **8** | **V1** | **V2** | **V3** | **V4** |
|---|---|---|---|---|---|---|---|---|---|---|---|---|---|
| D4 | kg/h | 1,0 | 2,0 | 18 | 15 | 15 | 15 | 110 | 120 | 250* | 240* | 10 | 15 |
| Zerstäuberluftmenge | Nm³/h | 4,0 | 3,4 | 30 | 30 | 15 | 30 | 55 | 50 | 35,8 | 17,3 | 12,0 | 7,00 |
| D4/ Zerstäuberluftmenge | kg/Nm³ | 0,25 | 0,58 | 0,60 | 0,50 | 1,00 | 0,50 | 2,00 | 2,40 | 6,98 | 13,87 | 0,83 | 2,14 |
| Sprayfläche¹ | dm² | 0,88 | 0,88 | 3,44 | 3,44 | 2,68 | 3,44 | 12,2 | 12,2 | 0,41 | 0,41 | 0,18 | 0,18 |
| Sprayfläche/ Reaktorquerschnittsfläch e | | 0,50 | 0,50 | 0,45 | 0,45 | 0,35 | 0,45 | 0,62 | 0,62 | 0,05 | 0,05 | 0,02 | 0,02 |
| Wasserstoff | Nm³/h | 2,0 | 4,0 | 24 | 20 | 22 | 30 | 45 | 50 | 40 | 45 | 27 | 27 |
| Primärluft | Nm³/h | 20 | 20 | 110 | 80 | 90 | 100 | 600 | 800 | 5000 | 5100 | 152 | 152 |
| Sekundärluft | Nm³/h | 5 | 25 | 40 | 45 | 60 | 50 | 400 | 250 | - | - | - | - |
| Sekundär-/Primärluft | | 0,25 | 1,25 | 0,36 | 0,56 | 0,67 | 0,50 | 0,67 | 0,31 | - | - | - | - |
| mittlere Temperatur | °C | 642 | 664 | 413 | 681 | 826 | 750 | 695 | 752 | 950 | 1030 | 869 | 974 |
| mittlere Verweilzeit | s | 1,67 | 1,02 | 1,96 | 1,78 | 1,40 | 1,45 | 0,59 | 0,52 | 0,04 | 0,04 | 1,31 | 1,11 |
| BET -Oberfläche | m²/g | 202 | 128 | 85 | 139 | 197 | 293 | 120 | 200 | 60 | 70 | 25 | 16 |
| C-Gehalt | Gew.-% | 0,04 | 0,01 | 0,02 | 0,03 | 0,04 | 0,03 | 0,02 | 0,03 | 0,14 | 0,15 | 0,13 | 0,16 |

| | | | | | | | | | | | | | |
|---|---|---|---|---|---|---|---|---|---|---|---|---|---|
| * Gehalt D4 = 75 Gew.-%, verdünnt mit Testbenzin; ¹ 30 cm unter Düse | | | | | | | | | | | | | |

## Patentansprüche

1. Verfahren zur Herstellung von Metalloxid- und/oder Siliciumdioxidpulvern mittels einer Flammenspraypyrolyse ,
**dadurch gekennzeichnet, dass**
man ein eine Metall- und/oder Siliciumverbindung enthaltendes Aerosol in einem Reaktor in eine Flamme einbringt und dort zur Reaktion bringt und das erhaltene Metalloxid- und/oder Siliciumdioxidpulver von gasförmigen Stoffen abtrennt, wobei
a) die Flamme durch die Zündung eines Sauerstoff enthaltenden Gases (1) mit einem Brenngas gebildet wird,
b) das Aerosol durch gemeinsames Zerstäuben einer eine Metall- und/oder Siliciumverbindung enthaltenden Lösung und eines Zerstäubungsgases mittels einer oder mehrerer Düsen erhalten wird und
c) das Verhältnis der Sprayfläche zur Reaktorquerschnittsfläche wenigstens 0,2 ist.

2. Verfahren nach Anspruch 1, **dadurch gekennzeichnet, dass**
die Zerstäubungsform des Aerosols ein kreisförmiger Kegel mit einem Streubereich von 70 - 130° ist.

3. Verfahren nach den Ansprüchen 1 oder 2, **dadurch gekennzeichnet, dass**
die mittlere Tropfengröße des zerstäubten Aerosoles 10 - 150 µm ist.

4. Verfahren nach den Ansprüchen 1 bis 3, **dadurch gekennzeichnet, dass**
das Aerosol erzeugt wird, indem die die Metall- und/oder Siliciumverbindung enthaltende Lösung und das Zerstäubungsgas in eine Mischkammer innerhalb der Düse strömen und in der Mischkammer vorgesehene Einbauten die Lösung unter Einwirkung des Zerstäubungsgases in einzelnen Tröpfchen zerteilt wird und das Aerosol aus der Mischkammer über Bohrungen in den Reaktor eingebracht wird.

5. Verfahren nach den Ansprüchen 1 bis 4, **dadurch gekennzeichnet, dass**
man über eine oder mehrere Stellen an der Reaktorwandung ein die Flamme umhüllendes Sauerstoff enthaltendes Gas (2) in den Reaktor einbringt.

6. Verfahren nach den Ansprüchen 1 bis 5, **dadurch gekennzeichnet, dass** Sauerstoff enthaltendes Gas (2) / Sauerstoff enthaltendes Gas (1) = 0,1 - 2.

7. Verfahren nach den Ansprüchen 1 bis 6, **dadurch gekennzeichnet, dass** für die Metall- und/ oder Siliciumkomponente der Metall- und/oder Siliciumverbindung das Metall aus der Gruppe bestehend aus AI, Co, Cr, Cu, Fe, Hf, In, Li, Mn, Mo, Nb, Ni, Sn, Ta, Ti, V, Y, Zn und Zr ausgewählt ist.

8. Verfahren nach den Ansprüchen 1 bis 7, **dadurch gekennzeichnet, dass**
die Metall- und/oder Siliciumverbindung neben der Metall- und/oder Siliciumkomponente Kohlenstoff enthält.

9. Verfahren nach den Ansprüchen 1 bis 8, **dadurch gekennzeichnet, dass**
die Metall- und/oder Siliciumverbindung eine siliciumhaltige Verbindung ist, die aus der Gruppe bestehend aus Silanen, Polysiloxanen, cyclischen Polysiloxanen, Silazanen und beliebigen Mischungen hiervon ausgewählt wird.

10. Verfahren nach Anspruch 1, zur Herstellung eines Kieselsäurepulvers mit einer BET-Oberfläche von wenigstens 50 m²/g und einem Kohlenstoffgehalt von weniger als 0,1 Gew.-% mittels einer Flammenspraypyrolyse, bei dem man ein eine siliciumhaltige Verbindung enthaltendes Aerosol in einem Reaktor in eine Flamme einbringt und dort zur Reaktion bringt, und das erhaltene Kieselsäurepulver von gasförmigen Stoffen abtrennt,
**dadurch gekennzeichnet, dass**
a) die Flamme durch die Zündung eines Sauerstoff enthaltenden Gases mit einem Brenngas gebildet wird,
b) die siliciumhaltige Verbindung aus der Gruppe bestehend aus Silanen, Polysiloxanen, cyclischen Polysiloxanen, Silazanen und beliebigen Mischungen hiervon ausgewählt ist,
c) das Aerosol durch gemeinsames Zerstäuben einer die siliciumhaltige Verbindung enthaltenden Lösung und eines Zerstäubungsgases mittels einer oder mehrerer Düsen erhalten wird und das Verhältnis der Sprayfläche zur Reaktorquerschnittsfläche wenigstens 0,2 ist und man
d) zusätzlich ein Sauerstoff enthaltendes Gas (2) in den Reaktor einbringt, wobei das Verhältnis Sauerstoff enthaltendes Gas (2) / Sauerstoff enthaltendes Gas (1) = 0,1 - 2 ist.

## Claims

1. Process for producing metal oxide and/or silicon oxide powders by means of flame spray pyrolysis, **characterized in that**
an aerosol comprising a metal compound and/or silicon compound is introduced into a flame in a reactor and reacted therein, and the metal oxide powder and/or silicon oxide powder obtained is separated from gaseous substances, wherein
a) the flame is formed by the ignition of an oxygen-containing gas (1) with a fuel gas,
b) the aerosol is obtained by joint atomization of a solution containing a metal compound and/or silicon compound and an atomization gas by means of one or more nozzles and
c) the ratio of the spray area to the cross-sectional reactor area is at least 0.2.

2. Process according to Claim 1, **characterized in that** the atomization form of the aerosol is a circular cone having a scatter region of 70-130°.

3. Process according to Claim 1 or 2, **characterized in that**
the mean droplet size of the atomized aerosol is 10-150 µm.

4. Process according to any of Claims 1 to 3, **characterized in that**
the aerosol is produced by virtue of the solution containing the metal compound and/or silicon compound and the atomization gas flowing into a mixing chamber within the nozzle and internals provided within the mixing chamber dividing the solution into individual droplets under the action of the atomization gas and aerosol from the mixing chamber being introduced through holes into the reactor.

5. Process according to any of Claims 1 to 4, **characterized in that**
an oxygen-containing gas (2) that surrounds the flame is introduced into the reactor through one or more points in the reactor wall.

6. Process according to any of Claims 1 to 5, **characterized in that**
oxygen-containing gas (2)/oxygen-containing gas (1) = 0.1-2.

7. Process according to any of Claims 1 to 6, **characterized in that**, for the metal component and/or silicon component of the metal compound and/or silicon compound, the metal is selected from the group consisting of Al, Co, Cr, Cu, Fe, Hf, In, Li, Mn, Mo, Nb, Ni, Sn, Ta, Ti, V, Y, Zn and Zr.

8. Process according to any of Claims 1 to 7, **characterized in that**
the metal compound and/or silicon compound contains carbon as well as the metal component and/or silicon component.

9. Process according to any of Claims 1 to 8, **characterized in that**
the metal compound and/or silicon compound is a silicon compound which is selected from the group consisting of silanes, polysiloxanes, cyclic polysiloxanes, silazanes and any desired mixtures thereof.

10. Process according to Claim 1 for producing a silica powder having a BET surface area of at least 50 m²/g and a carbon content of less than 0.1% by weight by means of flame spray pyrolysis, in which an aerosol containing a silicon compound is introduced into a flame in a reactor and reacted therein, and the silica powder obtained is separated from gaseous substances, **characterized in that**
a) the flame is formed by the ignition of an oxygen-containing gas with a fuel gas,
b) the silicon compound is selected from the group consisting of silanes, polysiloxanes, cyclic polysiloxanes, silazanes and any desired mixtures thereof,
c) the aerosol is obtained by joint atomization of a solution containing the silicon compound and an atomization gas by means of one or more nozzles and the ratio of the spray area to the cross-sectional reactor area is at least 0.2 and
d) an oxygen-containing gas (2) is additionally introduced into the reactor, where the ratio of oxygen-containing gas (2)/oxygen-containing gas (1) = 0.1-2.

## Revendications

1. Procédé pour la préparation de poudres d'oxydes métalliques et/ou de dioxyde de silicium au moyen d'une pyrolyse par pulvérisation à la flamme, **caractérisé en ce qu'**on introduit un aérosol contenant un composé métallique et/ou de silicium dans un réacteur dans une flamme et qu'on l'y met en réaction et qu'on sépare la poudre d'oxyde métallique et/ou de dioxyde de silicium obtenues de matières gazeuses,
a) la flamme étant formée par la combustion d'un gaz (1) contenant de l'oxygène avec un gaz combustible,
b) l'aérosol étant obtenu par pulvérisation conjointe d'une solution contenant un composé métallique et/ou de silicium et d'un gaz de pulvérisation au moyen d'une ou plusieurs buses et
c) le rapport de la surface de pulvérisation à la surface de section transversale de réacteur étant d'au moins 0,2.

2. Procédé selon la revendication 1, **caractérisé en ce que** la forme de pulvérisation de l'aérosol est un cône circulaire doté d'un domaine de dispersion de 70 à 130°.

3. Procédé selon la revendication 1 ou 2, **caractérisé en ce que** la grosseur moyenne de goutte de l'aérosol pulvérisé est de 10 à 150 µm.

4. Procédé selon les revendications 1 à 3, **caractérisé en ce que** l'aérosol est produit par le fait que la solution contenant un composé métallique et/ou de silicium et le gaz de pulvérisation s'écoulent dans un compartiment de mélange à l'intérieur de la buse et la solution est divisée en des gouttelettes individuelles sous l'effet du gaz de pulvérisation dans des éléments encastrés prévus dans le compartiment de mélange et l'aérosol est amené du compartiment de mélange dans le réacteur par l'intermédiaire de perçages.

5. Procédé selon les revendications 1 à 4, caractérisé qu'on introduit dans le réacteur un gaz (2) contenant de l'oxygène enveloppant la flamme, par un ou plusieurs endroits au niveau de la paroi de réacteur.

6. Procédé selon les revendications 1 à 5, **caractérisé en ce que** le rapport gaz (2) contenant de l'oxygène/gaz (1) contenant de l'oxygène = 0,1 à 2.

7. Procédé selon les revendications 1 à 6, **caractérisé en ce que** le métal pour le composant métallique et/ou de silicium du composé métallique et/ou de silicium est choisi dans le groupe constitué par Al, Co, Cr, Cu, Fe, Hf, In, Li, Mn, Mo, Nb, Ni, Sn, Ta, Ti, V, Y, Zn et Zr.

8. Procédé selon les revendications 1 à 7, **caractérisé en ce que** le composé métallique et/ou de silicium contient, outre le composant métallique et/ou de silicium, du carbone.

9. Procédé selon les revendications 1 à 8, **caractérisé en ce que** le composé métallique et/ou de silicium est un composé contenant du silicium qui est choisi dans le groupe constitué par les silanes, les polysiloxanes, les polysiloxanes cycliques, les silazanes et de quelconques mélanges de ceux-ci.

10. Procédé selon la revendication 1, pour la préparation d'une poudre de silice dotée d'une surface BET d'au moins 50 m²/g et d'une teneur en carbone inférieure à 0,1 % en poids au moyen d'une pyrolyse par pulvérisation à la flamme, dans lequel on introduit un aérosol contenant un composé contenant du silicium dans un réacteur dans une flamme et on l'y met en réaction, et on sépare la poudre de silice obtenue de matières gazeuses,
**caractérisé en ce que**
a) la flamme est formée par la combustion d'un gaz contenant de l'oxygène avec un gaz combustible,
b) le composé contenant du silicium est choisi dans le groupe constitué par les silanes, les polysiloxanes, les polysiloxanes cycliques, les silazanes et de quelconques mélanges de ceux-ci,
c) l'aérosol est obtenu par pulvérisation conjointe d'une solution contenant un composé contenant du silicium et d'un gaz de pulvérisation au moyen d'une ou plusieurs buses et le rapport de la surface de pulvérisation à la surface de section transversale de réacteur est d'au moins 0,2 et
d) on introduit de plus dans le réacteur un gaz (2) contenant de l'oxygène, le rapport gaz (2) contenant de l'oxygène/gaz (1) contenant de l'oxygène étant de 0,1 à 2.
